(19) Europäisches Patentamt
European Patent Office
Office européen des brevets

(11) Publication number: **0 292 243 B1**

(12) # EUROPEAN PATENT SPECIFICATION

(45) Date of publication of patent specification: **20.07.94**

(51) Int. Cl.$^5$: **C08L 79/08**

(21) Application number: **88304467.9**

(22) Date of filing: **17.05.88**

The file contains technical information submitted after the application was filed and not included in this specification

(54) **Heat resistant resin composition.**

(30) Priority: **20.05.87 JP 126320/87**

(43) Date of publication of application:
**23.11.88 Bulletin 88/47**

(45) Publication of the grant of the patent:
**20.07.94 Bulletin 94/29**

(84) Designated Contracting States:
**CH DE FR GB IT LI NL**

(56) References cited:
**EP-A- 0 251 741**
**WO-A-87/01378**
**WO-A-87/06251**

(73) Proprietor: **MITSUI TOATSU CHEMICALS, Inc.**
**2-5 Kasumigaseki 3-chome**
**Chiyoda-Ku Tokyo 100(JP)**

Proprietor: **NTN CORPORATION**
**3-17, Kyomachibori 1-chome**
**Nishi-ku**
**Osaka-shi Osaka 550(JP)**

(72) Inventor: **Yoshikawa, Masao**
**1200-267, Aza Yamabata**
**Nishinesho**
**Kuwana-shi Mie-ken(JP)**
Inventor: **Ohta, Masahiro**
**1541, Yabecho**
**Totsuka-ku**
**Yokohama-shi Kanagawa-ken(JP)**

(74) Representative: **Hayward, Denis Edward Peter**
**Lloyd Wise, Tregear & Co.**
**Norman House**
**105-109 Strand**
**London WC2R 0AE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a heat resistant resin composition.

Polyimide obtained by the reaction of aromatic tetracarboxylic acid dianhydride with diamine is excellent in mechanical strength, dimensional stability, flame retardance, electrical insulation and chemical resistance in addition to having high-temperature resistance. Therefore, polyimide has so far been used in the field of electrical and electronic parts, aeronautics and space instruments, transport machinery and business machine members, and is hereafter expected to be widely used in fields where heat resistance is required.

Although many kinds of polyimide which have been developed to date exhibit excellent properties, generally they have a high softening temperature and are insoluble in solvents, thereby causing difficulties in moulding.

For example, a polyimide consisting of a polymer chain having repeating units represented by the following formula:

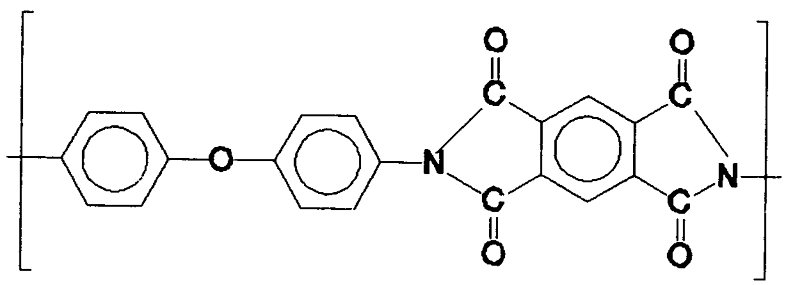

(Trade Mark KAPTON and VESPEL, products of E.I. du Pont de Nemours and Co.) indicates no distinct glass transition temperature and has excellent heat resistance. The polyimide, however, is difficult to process by hot moulding.

Aromatic polyetherimide (Trade Mark ULTEM, a product of General Electric Co.) is known to possess better processability than conventional polyimide. The typical aromatic polyetherimide has repeating units represented by the following formula:

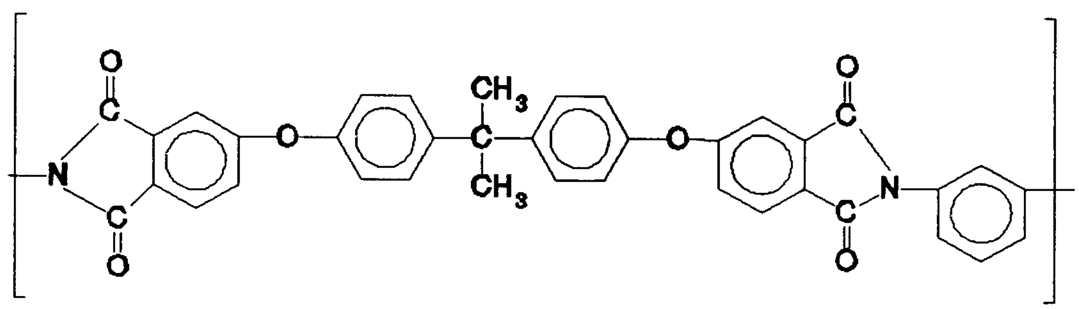

In spite of having imide linkages in the molecule similarly to conventional polyimide, polyetherimide can be fusion moulded and is excellent in mechanical strength, flame retardance, electrical properties and moulding ability, and thus is expected to be widely used. Aromatic polyetherimide, however, has a low heat distortion temperature of about 200°C as compared with that of conventional polyimide of 280°C. Accordingly, reduction of mechanical and abrasion properties at high temperatures has caused problems in the development of its application. In order to alleviate these disadvantages solid lubricants such as graphite, fluorine-containing-resin, titanium oxide and molybdenum disulfide have been added to the aromatic polyetherimide in combination with or separately from inorganic fillers such as glass fibres and carbon fibres. However, the addition of inorganic fillers leads to lower abrasion resistance and the addition of solid lubricants tends to cause marked reduction in mechanical strength.

In addition, a method for the simultaneous use of aromatic polyetherimide and another resin such as aromatic polyamideimide has also been developed. Even in such a case, however, retention of mechanical strength, particularly impact and abrasion resistance, has still been unsatisfactory.

Our own European Application Serial No. 235 294, discloses polyimides having repeating units represented by the formula:

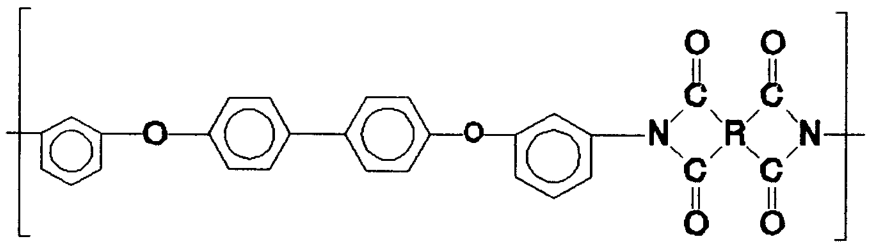

in which R represents an aliphatic group having two or more carbon atoms, a cycloaliphatic group, a monocyclic aromatic group, a fused ring polycyclic aromatic group, or a non-fused ring polycyclic aromatic group where the aromatic groups are linked to each other directly or through a linking member.
These polyimides are said to be excellent heat-resistant adhesives.

An object of this invention is to achieve a heat resistant resin composition having mechanical strength, particularly impact and abrasion resistance, at high temperatures, while maintaining other excellent properties such as flame retardance, good electrical properties, mechanical strength and mouldability which are the important characteristics of aromatic polyetherimides.

According to the present invention, a heat resistant resin composition consists essentially of 90 to 5 weight % of an aromatic polyetherimide not containing recurring units of formula I and 10 to 95 weight % of a polyimide composed of recurring units represented by the formula I:

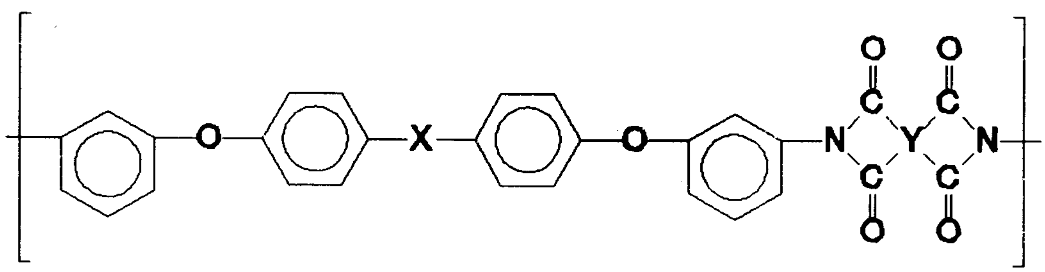

(I)

in which X is a direct bond or -S-, and Y is an aliphatic group having at least two carbon atoms, an alicyclic group, a monocyclic aromatic group, a fused polycyclic aromatic group or a polycyclic aromatic group where the aromatic rings are connected to one another by a direct bond or by a bridging group.

The aromatic polyetherimide which is used in this invention may be that described in Polymer Preprint 24, (2), 312-313 (1983). That polyetherimide is a polymer consisting of ether and imide linkages as a required bonding unit and is substantially composed of recurring units which are represented by the following formula:

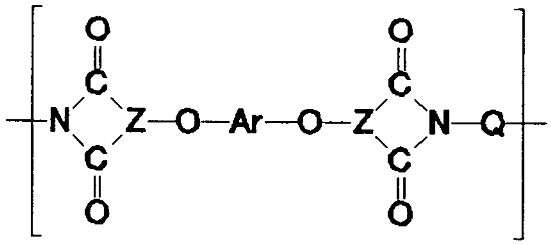

in which Z is a trifunctional aromatic group where two functional groups out of the three are connected with adjacent carbon atoms, and both Q and Ar are residues of divalent aromatic groups.

Representative examples of such aromatic polyetherimides include the compounds having recurring units represented by the following formulae:

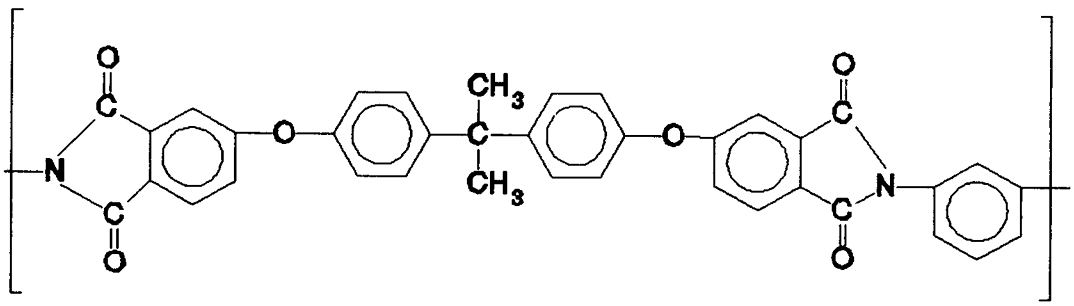

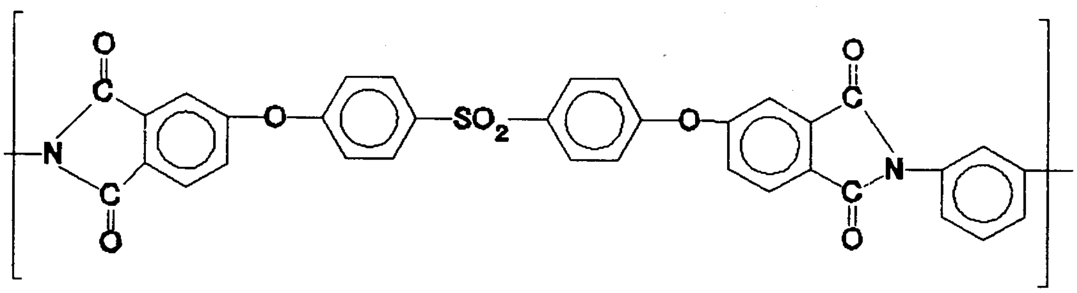

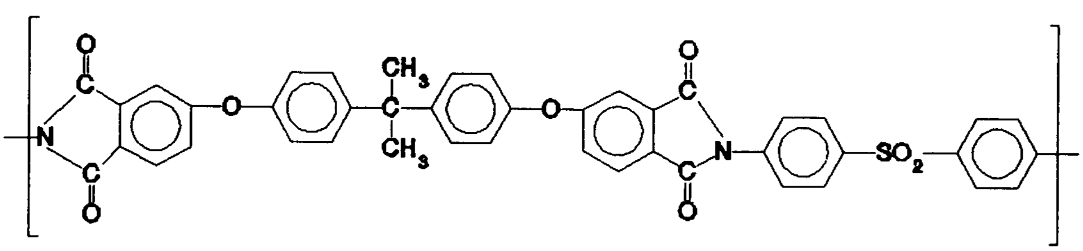

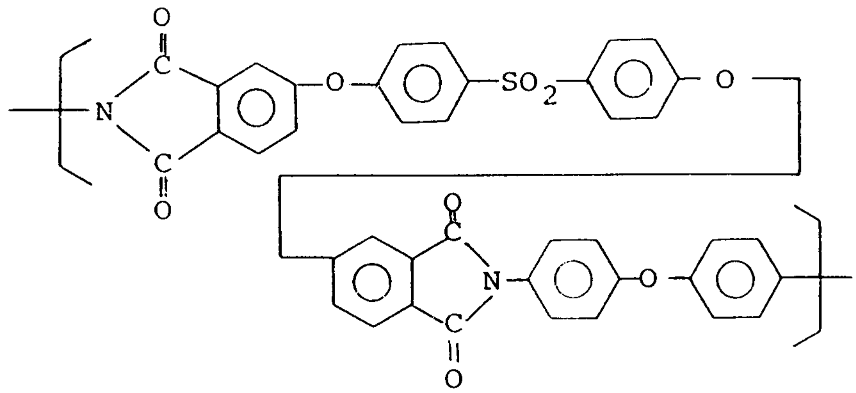

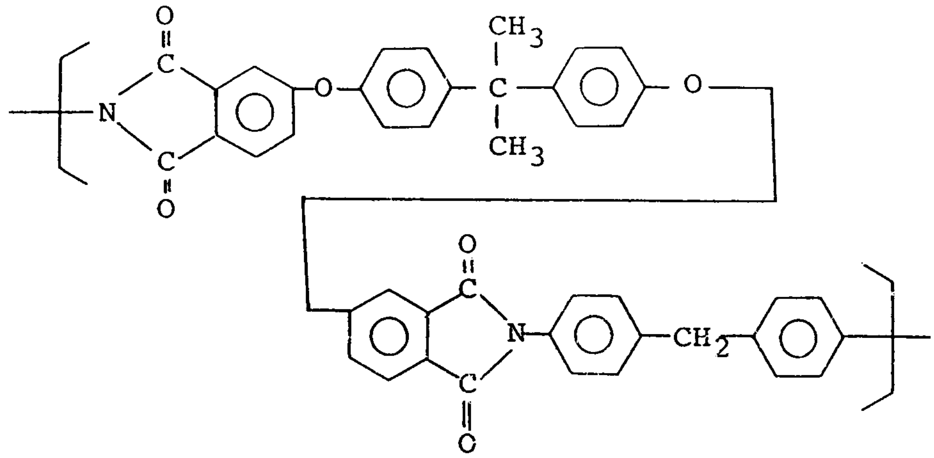

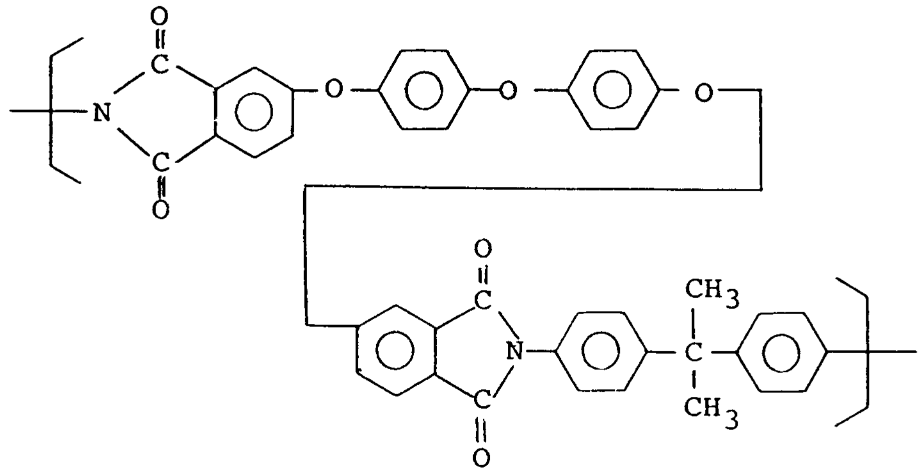

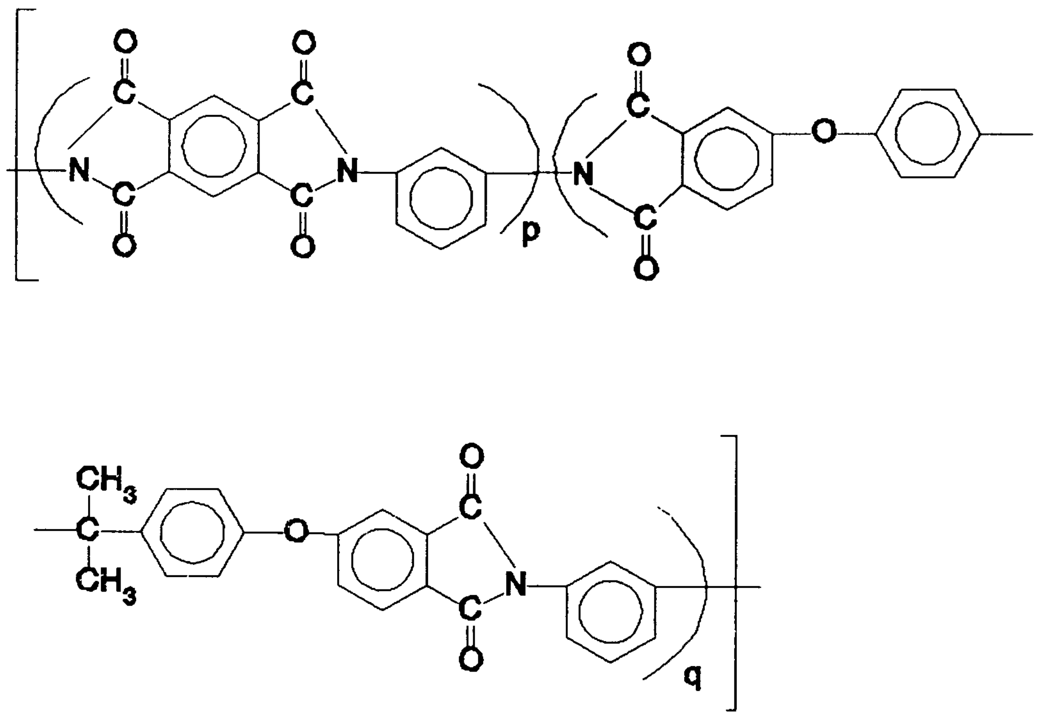

(p = 0.1~0.3, q = 0.9~0.7)

Some of the above aromatic polyetherimides are commercially available from General Electric Co. with trade marks such as ULTEM-1000, ULTEM-4000 and ULTEM-6000.

As the diamine component of the reaction to produce the polyimide having recurring units of formula I, an etherdiamine may be used represented by the formula:

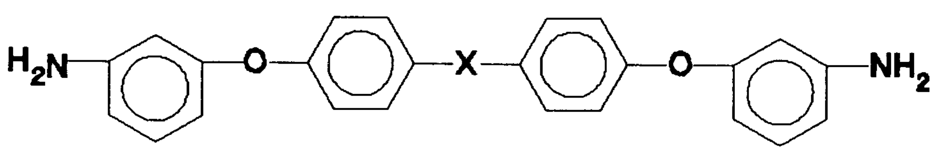

in which X is a direct bond or -S-.

The etherdiamine is reacted with at least one tetracarboxylic acid dianhydride, and the resulting polyamic acid is subjected to dehydrating condensation to obtain the corresponding polyimide.

Thus, the etherdiamines contemplated for use in this invention are 4,4'-bis(3-aminophenoxy)biphenyl and bis[4-(3-aminophenoxy)phenyl]sulfide. these diamines can be used alone or as a mixture.

In addition, other diamines can be included with the etherdiamine in a range which will cause no adverse effect on the flowability of the molten polyimide. Diamines which may be used in admixture with the etherdiamine include, for example, m-aminobenzylamine, p-aminobenzylamine, 3,3′-diaminodiphenyl ether, 3,4′-diaminodiphenyl ether, 4,4′-diaminodiphenylether, 3,3′-diaminodiphenyl sulfide, 3,4′-diaminodiphenyl sulfide, 4,4′-diaminodiphenyl sulfide, 3,3′-diaminodiphenyl sulfone, 3,4′-diaminodiphenyl sulfone, 4,4′-diaminodiphenyl sulfone, 3,3′-diaminobenzophenone, 3,4′-diaminobenzophenone, 4,4′-diaminobenzophenone, 1,3-bis(3-aminophenoxy)benzene, 1,3-bis(4-aminophenoxy)benzene, 1,4-bis(3-aminophenoxy)-benzene, 1,4-bis(4-aminophenoxy)benzene, 2,2-bis[4-(4-aminophenoxy)phenyl]propane, 4,4′-bis(4-aminophenoxy)biphenyl, 4,4′-bis(4-aminophenoxy)ketone, bis[4-(4-aminophenoxy)phenyl]sulfide, bis[4-(4-aminophenoxy)phenyl]sulfone, bis[4-(3-aminophenoxy)phenyl]methane, 1,1-bis[4-(3-aminophenoxy)phenyl]-ethane, 1,2-bis[4-(3-aminophenoxy)phenyl]ethane, 2,2-bis[4-(3-aminophenoxy)phenyl]propane, 2-[4-(3-aminophenoxy)phenyl]-2-[4-(3-aminophenoxy)-3-methylphenyl]propane, 2,2-bis[4-(3-aminophenoxy)-3-methylphenyl]propane, 2-[4-(3-aminophenoxy)phenyl]-2-[4-(3-aminophenoxy)-3,5-dimethylphenyl]propane, 2,2-bis[4-(3-aminophenoxy)-3,5-dimethylphenyl]propane, 2,2-bis[4-(3-aminophenoxy)phenyl]butane, 2,2-bis-

[4-(3-aminophenoxy)phenyl]-1,1,1,3,3,3-hexafluoropropane, 4,4′-bis(3-aminophenoxy)biphenyl, 4,4′-bis(3-aminophenoxy)-3-methylbiphenyl, 4,4′-bis(3-aminophenoxy)-3,3′-dimethylbiphenyl, 4,4′-bis(3-aminophenoxy)-3,5-dimethylbiphenyl, 4,4′-bis(3-aminophenoxy)-3,3′,5,5′-tetramethylbiphenyl, bis[4-(3-aminophenoxy)phenyl]-ketone, bis[4-(3-aminophenoxy)phenyl]sulfide and bis[4-(3-aminophenoxy)phenyl]sulfone. These diamines can be used in admixture with the etherdiamine of the above formula (II) in an amount of normally not more than 30 wt.%, and preferably not more than 5 wt.%.

The polyimide can be prepared by reacting the aforesaid diamine with tetracarboxylic acid dianhydride in an organic solvent, followed by conducting dehydrating condensation.

The tetracarboxylic acid dianhydride used in this process has the following formula:

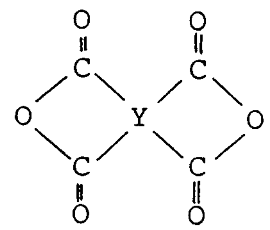

where Y is the same as above. Representative examples of these tetracarboxylic acid dianhydrides include ethylenetetracarboxylic acid dianhydride, 1,2,3,4-butanetetracarboxylic acid dianhydride, cyclopentanetetracarboxylic acid dianhydride, pyromellitic dianhydride, 3,3',4,4'-benzophenonetetracarboxylic acid dianhydride, 2,2',3,3'-benzophenonetetracarboxylic acid dianhydride, 3,3',4,4'-biphenyltetracarboxylic acid dianhydride, 2,2',3,3'-biphenyltetracarboxylic acid dianhydride, bis(3,4-dicarboxyphenyl)ether dianhydride, bis(3,4-dicarboxyphenyl) sulfone dianhydride, 1,1-bis(2,3-dicarboxyphenyl)ethane dianhydride, bis(2,3-dicarboxyphenyl)methane dianhydride, bis(3,4-dicarboxyphenyl)methane dianhydride, 2,3,6,7-naphthalenetetracarboxylic acid dianhydride, 1,4,5,8-naphthalenetetracarboxylic acid dianhydride, 1,2,5,6-naphthalenetetracarboxylic acid dianhydride, 1,2,3,4-benzenetetracarboxylic acid dianhydride, 3,4,9,10-perylenetetracarboxylic acid dianhydride, 2,3,6,7-anthracenetetracarboxylic acid dianhydride, 1,2,7,8-phenanthrenetetracarboxylic acid dianhydride, 4,4'-(p-phenylenedioxy)diphthalic acid dianhydride and 4,4'-(m-phenylenedioxy)diphthalic acid dianhydride. Among these acid dianhydrides, pyromellitic dianhydride, 3,3',4,4'-benzophenonetetracarboxylic acid dianhydride and 3,3',4,4'-biphenyltetracarboxylic acid dianhydride are particularly preferred.

The tetracarboxylic acid dianhydrides can be used alone or as a mixture of two and more.

The heat resistant resin composition of this invention consists essentially of 90 to 5 weight % of the aromatic polyetherimide and 10 to 95 weight % of the polyimide. A preferred composition consists of 90 to 10 weight % of aromatic polyetherimide and 10 to 90 weight % of polyimide. A more preferred composition consists of 80 to 20 weight % of aromatic polyetherimide and 20 to 80 weight % of polyimide. When the content of the aromatic polyetherimide or the polyimide is above 95 weight % or below 5 weight %, the composition cannot provide the desired combination of excellent characteristics i.e. flowability, mechanical strength and particularly impact and abrasion resistance.

The composition of this invention may also include fillers such as are commonly used in resin compositions, in an amount which has no adverse effect on the desired properties. Possible fillers include abrasion resistance improvers such as graphite, carborundum, silica powder, molybdenum disulfide and fluorine-containing-resin; reinforcing materials such as glass fibres, carbon fibres, boron fibres, silicon carbide fibres, carbon whiskers, asbestos and metal fibres; flame retardance improvers such as antimony trioxide, magnesium carbonate and calcium carbonate; electrical property improvers such as clay and mica; tracking resistance improvers such as asbestos, silica and graphite; acid resistance improvers such as barium sulfate, silica and calcium metasilicate; thermal conductivity improvers such as iron powder, zinc powder, aluminum powder and copper powder; and other miscellaneous additives such as glass beads, glass spheres, talc, diatomaceous earth, alumina, silicate balloons, hydrated alumina, metal oxides, colouring agents and other materials which are stable above 300 °C.

The starting materials for the composition are mixed in advance. The mixing may be carried out by feeding each material separately to fusion mixing equipment, or by mixing the materials in a general purpose mixer, such as a Henschel mixer, ball mixer or ribbon blender, prior to feeding the materials to the fusion mixer.

The temperature of the fusion mixer will normally be 250 to 400 °C and preferably 300 to 380 °C. Any moulding process, including compression moulding, sinter moulding, injection moulding and extrusion moulding, may be employed. Injection moulding and extrusion moulding are recommended, from the viewpoint of obtaining a uniformly fused blend and high productivity.

The present invention will hereinafter be further illustrated by way of Synthesis Examples, Examples of moulding and Comparative Examples. Unless otherwise specified, % and part respectively mean % by weight and part by weight.

Synthesis Example 1

A reaction vessel equipped with a stirrer reflux condenser and nitrogen inlet tube was charged with 4.0 kg (10 moles) of 4,4'-bis(3-aminophenoxy)diphenyl sulfide and 34.8 kg of N,N-dimethylacetamide. The mixture had added to it 2.14 kg (9.8 moles) of pyromellitic dianhydride in a nitrogen atmosphere at room temperature, with care taken to avoid temperature rise of the solution, and the mixture stirred for about 20 hours at room temperature.

To the polyamic acid solution obtained, 2.02 kg (20 moles) of triethylamine and 2.55 kg (25 moles) of acetic anhydride were added dropwise in a nitrogen atmosphere at room temperature. The reaction mixture was stirred for about 20 hours to obtain a light yellow slurry. The slurry was filtered, washed with methanol, filtered again and dried at 180 °C for 8 hours under reduced pressure to obtain 5.64 kg (about 97.5% yield) of polyimide powder. The inherent viscosity of the polyimide powder was 0.85 dl/g.

The inherent viscosity was measured at 35 °C after dissolving 0.5 g of the polyimide powder in 100 ml of a solvent (a mixture of p-chlorophenol and phenol in the ratio of 90:10) at elevated temperature.

Examples 1-4 and Comparative Examples 1-2

The polyimide powder obtained in Synthesis Example 1 was dry blended with aromatic polyetherimide powder (Trade Mark; ULTEM 1000, a product of General Electric Co. in U.S.A.) in the ratios of Table 1 and the blend pelletized by extruding at 370 to 400 °C with a twin screw extruder. The pellets thus obtained were fed to an injection moulding machine having a cylinder temperature of 360 to 390 °C, an injection pressure of 1000 $kg/cm^2$ and a mould temperature of 100 to 150 °C. The injection moulded specimens were measured as to their mechanical and abrasion properties. Some of the pellets obtained were fed to a Brabender type viscosimeter (Trade Mark; Laboplastomill, a product of Toyo Seiki Seisakusho Ltd.). Melt torque was measured under the conditions of 385 °C temperature and 50 rpm rotor revolution. The results obtained are given in Table 1. Thermal properties were measured with a rectangular specimen having dimensions of 6 x 3 x 3 mm. The glass transition temperature Tg was measured with a thermo-mechanical analysis instrument (Trade Mark; TM-30, a product of Shimadzu Seisakusho Ltd.). Heat distortion temperature was examined with a load of 18.6 $kg/cm^2$ in accordance with ASTM D-648. Impact strength with a 1/8 inch (approximately 3.2 mm) notch was tested in accordance with ASTM D-256. Coefficient of abrasion was measured with a thrust abrader at a sliding velocity of 128 m/min and a surface pressure of 0.78 $kg/cm^2$. (Hereinafter the same testing methods as in Examples 1 to 4 were employed for all Examples and Comparative Examples.)

Table 1

| | Example | | | | Comparative example | |
|---|---|---|---|---|---|---|
| | 1 | 2 | 3 | 4 | 1 | 2 |
| Polymer (wt.%) | | | | | | |
| Aromatic polyetherimide (ULTEM 1000) | 10 | 50 | 70 | 90 | 100 | 98 |
| Polyimide (Polymer obtained in Synthesis Example 1) | 90 | 50 | 30 | 10 | 0 | 2 |
| Property | | | | | | |
| Glass transition temperature (°C) | 235 | 232 | 227 | 220 | 215 | 217 |
| Heat distortion temperature (°C) | 219 | 215 | 210 | 202 | 193 | 195 |
| Izod impact strength (notched) (kg·cm/cm) | 20.7 | 18.5 | 16.0 | 14.0 | 4.7 | 4.7 |
| Abrasion Coefficient ($x10^{-8}$ $cm^3$/kg·m) | | | | | | |
| 23°C | 72 | 80 | 88 | 98 | 201 | 200 |
| 250°C | 322 | 511 | 595 | 630 | 1785 | 1800 |
| Friction coefficient | | | | | | |
| 23°C | 0.25 | 0.25 | 0.25 | 0.25 | 0.25 | 0.25 |
| 250°C | 0.24 | 0.26 | 0.27 | 0.30 | 0.40< | 0.40< |
| Melt torque (kg·cm) | 130 -132 | 115 -118 | 88 -93 | 80 -83 | 78 -80 | 77 -80 |

Synthesis Examples 2-5

The same procedures as in Synthesis Example 1 were carried out except that various diamines were used in place of 4,4'-bis(3-aminophenoxy)diphenyl sulfide, various tetracarboxylic acid dianhydrides were

used, and the amounts of the diamines, N,N-dimethylacetamide and tetracarboxylic acid dianhydrides were changed.

As a result, various kinds of polyimide powder were obtained. Table 2 gives the materials and quantities used to prepare the polyimides and the inherent viscosities of the polyimides obtained.

Table 2

| Synthesis example | Diamine | N,N-Dimethyl acetamide | Tetracarboxylic acid dianhydride | Polyimide inherent viscosity (dl/g) |
|---|---|---|---|---|
| 2 | 4,4'-Bis(3-aminophenoxy) biphenyl<br>3.68 kg (10 moles) | 38.8 kg | 3,3',4,4'-benzophenone-tetracarboxylic acid dianhydride<br>3.16 kg (9.85 moles) | 0.62 |
| 3 | 4,4'-Bis(3-aminophenoxy) biphenyl<br>3.68 kg (10 moles) | 33.0 kg | Pyromellitic dianhydride<br>2.125 kg (9.75 moles) | 0.70 |
| 4 | 4,4'-Bis(3-aminophenoxy) diphenyl sulfide<br>3.8 kg (9 moles)<br>4,4'-Diaminodiphenyl ether<br>0.202 kg (1 mole) | 33.7 kg | Pyromellitic dianhydride<br>2.11 kg (9.7 moles) | 0.78 |
| 5 | 4,4'-Bis(3-aminophenoxy) biphenyl<br>3.5 kg (9.5 moles)<br>4,4'-Diaminodiphenyl ether<br>0.101 kg (0.5 mole) | 32.3 kg | Pyromellitic dianhydride<br>2.10 kg (9.65 moles) | 0.72 |

Examples 5-15 and Comparative Examples 3-5

The polyimide powder obtained in Synthesis Examples 2-5 was kneaded with aromatic polyetherimide powder (Trade Mark; ULTEM 1000, a product of General Electric Co. in U.S.A.) by fusing in various mixing ratios to obtain uniformly blended pellets. The pellets obtained were moulded under the same conditions as described in Example 1. Thermal, mechanical and abrasive properties were measured on the moulded specimens and are given in Tables 4-7. The polyimides used in these Examples and Comparative Examples are given in Table 3.

Table 3

| Polyimide | Example No. | Comparative Example No. | Table No. |
|---|---|---|---|
| Synthesis Example 2 | 5 - 7 | 3 | 4 |
| Synthesis Example 3 | 8 - 11 | 4 | 5 |
| Synthesis Example 4 | 12 - 13 | - | 6 |
| Synthesis Example 5 | 14 - 15 | 5 | 7 |
| Synthesis Example 3 | 16 - 18 | - | 8 |

Table 4

| | Example | | | Comparative example |
|---|---|---|---|---|
| | 5 | 6 | 7 | 3 |
| Polymer (wt.%) | | | | |
| Aromatic polyetherimide (ULTEM 1000) | 50 | 70 | 90 | 97 |
| Polyimide (Polymer obtained in Synthesis Example 2) | 50 | 30 | 10 | 3 |
| Property | | | | |
| Glass transition temperature (°C) | 231 | 227 | 221 | 218 |
| Heat distortion temperature (°C) | 214 | 210 | 204 | 199 |
| Izod impact strength (notched) (kg·cm/cm) | 15.0 | 13.5 | 11.2 | 5.0 |
| Abrasion Coefficient ($x10^{-8}$ $cm^3$/kg·m) | | | | |
| 23°C | 78 | 87 | 96 | 198 |
| 250°C | 499 | 587 | 600 | 1790 |
| Friction coefficient | | | | |
| 23°C | 0.24 | 0.24 | 0.25 | 0.25 |
| 250°C | 0.24 | 0.26 | 0.31 | 0.40< |
| Melt torque (kg·cm) | 114 | 87 | 79 | 75 |
| | -118 | -92 | -83 | -78 |

Table 5

| | Example | | | | Comparative example |
|---|---|---|---|---|---|
| | 8 | 9 | 10 | 11 | 4 |
| Polymer (wt.%) | | | | | |
| Aromatic polyetherimide (ULTEM 1000) | 10 | 50 | 70 | 90 | 98 |
| Polyimide (Polymer obtained in Synthesis Example 3) | 90 | 50 | 30 | 10 | 2 |
| Property | | | | | |
| Glass transition temperature (°C) | 255 | 253 | 249 | 236 | 219 |
| Heat distortion temperature (°C) | 238 | 235 | 231 | 216 | 199 |
| Izod impact strength (notched) (kg·cm/cm) | 18.2 | 16.1 | 14.0 | 10.0 | 4.7 |
| Abrasion Coefficient ($x10^{-8}$ $cm^3$/kg·m) | | | | | |
| 23°C | 50 | 71 | 81 | 92 | 200 |
| 250°C | 302 | 490 | 570 | 820 | 1787 |
| Friction coefficient | | | | | |
| 23°C | 0.21 | 0.22 | 0.24 | 0.25 | 0.25 |
| 250°C | 0.21 | 0.24 | 0.25 | 0.29 | 0.40< |
| Melt torque (kg·cm) | 132<br>-135 | 115<br>-117 | 89<br>-91 | 81<br>-83 | 76<br>-78 |

Table 6

| | Example | |
|---|---|---|
| | 12 | 13 |
| Polymer (wt.%) | | |
| Aromatic polyetherimide (ULTEM 1000) | 10 | 90 |
| Polyimide (Polymer obtained in Synthesis Example 4) | 90 | 10 |
| Property | | |
| Glass transition temperature (°C) | 285 | 247 |
| Heat distortion temperature (°C) | 265 | 222 |
| Izod impact strength (notched) (kg·cm/cm) | 20 | 15 |
| Abrasion Coefficient ($x10^{-8}$ $cm^3$/kg·m) | | |
| 23°C | 68 | 96 |
| 250°C | 329 | 615 |
| Friction coefficient | | |
| 23°C | 0.24 | 0.24 |
| 250°C | 0.22 | 0.31 |
| Melt torque (kg·cm) | 131<br>-133 | 80<br>-84 |

Table 7

| | Example | | Comparative example |
|---|---|---|---|
| | 14 | 15 | 5 |
| Polymer (wt.%) | | | |
| Aromatic polyetherimide (ULTEM 1000) | 25 | 90 | 98 |
| Polyimide (Polymer obtained in Synthesis Example 5) | 75 | 10 | 2 |
| Property | | | |
| Glass transition temperature (°C) | 290 | 255 | 220 |
| Heat distortion temperature (°C) | 274 | 235 | 200 |
| Izod impact strength (notched) (kg·cm/cm) | 17 | 12 | 4.6 |
| Abrasion Coefficient ($x10^{-8}$ $cm^3/kg \cdot m$) | | | |
| 23°C | 48 | 78 | 196 |
| 250°C | 390 | 592 | 1305 |
| Friction coefficient | | | |
| 23°C | 0.21 | 0.23 | 0.24 |
| 250°C | 0.22 | 0.27 | 0.40< |
| Melt torque (kg·cm) | 121 -127 | 82 -85 | 77 -80 |

Examples 16-18

The polyimide powder obtained in Synthesis Example 3 was kneaded with aromatic polyetherimide powder (Trade Mark; ULTEM 6000, a product of General Electric Co. in U.S.A.) by fusing in various mixing ratios to obtain uniformly blended pellets. The pellets obtained were moulded under the same conditions as described in Example 1. Thermal and mechanical properties were measured on the moulded specimens and are given in Table 8.

Table 8

| | Example | | |
|---|---|---|---|
| | 16 | 17 | 18 |
| Polymer (wt.%) | | | |
| Aromatic polyetherimide (ULTEM 6000) | 10 | 50 | 90 |
| Polyimide (Polymer obtained in synthesis Example 3) | 90 | 50 | 10 |
| Property | | | |
| Glass transition temperature (°C) | 258 | 256 | 242 |
| Heat distortion temperature (°C) | 238 | 236 | 221 |
| Izod impact strength (notched) (kg. cm/cm) | 18.3 | 17.0 | 12.0 |

## Claims

**1.** A heat resistant resin composition consisting essentially of 90 to 5 weight % of an aromatic polyetherimide not containing recurring units of formula I and 10 to 95 weight % of a polyimide composed of recurring units represented by the formula I:

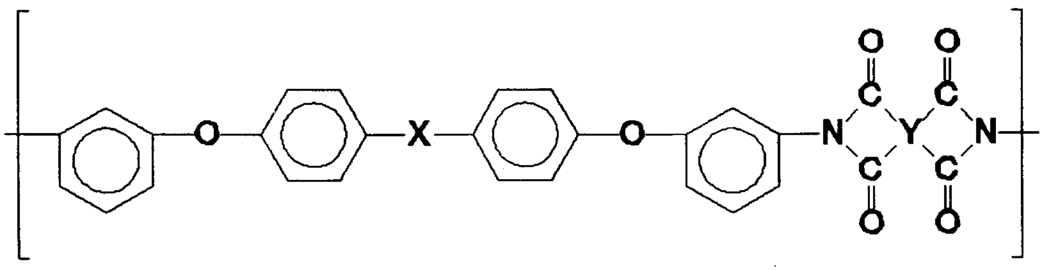

(I)

in which X is a direct bond or -S-, and Y is an aliphatic group having at least two carbon atoms, an alicyclic group, a monocyclic aromatic group, a fused polycyclic aromatic group or a polycyclic aromatic group where the aromatic rings are connected to one another by a direct bond or by a bridging group.

**2.** A heat resistant resin composition as claimed in Claim 1 in which Y is a residue of pyromellitic dianhydride, 3,3',4,4'-benzophenonetetracarboxylic acid dianhydride or 3,3',4,4'-biphenyltetracarboxylic acid dianhydride.

**3.** A heat resistant resin composition as claimed in Claim 1 or Claim 2 in which X is a direct bond.

**4.** A heat resistant resin composition as claimed in Claim 1 or Claim 2 in which X is -S-.

**5.** A heat resistant resin composition as claimed in any preceding claim in which the aromatic polyetherimide is composed of recurring units represented by the formula:

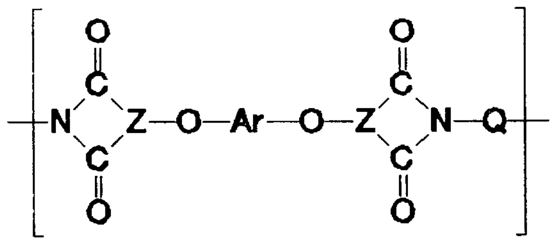

in which Z is a trifunctional aromatic group where two functional groups out of the three are connected with adjacent carbon atoms, and both Q and Ar are residues of divalent aromatic groups.

## Patentansprüche

1. Hitzebeständige Harzzusammensetzung, bestehend im wesentlichen aus 90 - 5 Gew.-% eines aromatischen Polyätherimids, welches keine wiederkehrenden Einheiten der Formel I aufweist und 10 - 95 Gew.-% eines Polyimids, welches sich aus wiederkehrenden Einheiten zusammensetzt, die durch die Formel I repräsentiert werden,

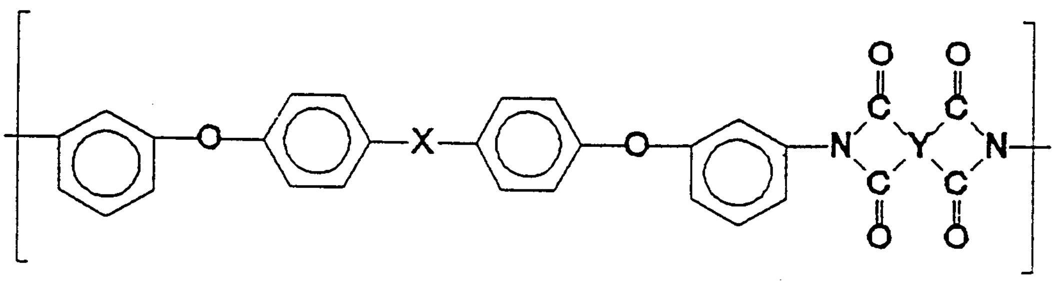

in welcher X eine direkte Bindung oder -S-, und Y eine aliphatische Gruppe mit wenigstens 2 Kohlenstoffatomen, eine alizyklische Gruppe, eine monozyklische aromatische Gruppe, eine verschmolzene, polyzyklische aromatische Gruppe oder eine polyzyklische aromatische Gruppe ist, worin die aromatischen Ringe durch eine direkte Bindung oder durch eine Brückengruppe miteinander verbunden sind.

2. Hitzebeständige Harzzusammensetzung nach Anspruch 1, in welcher Y ein Rest von Pyromellitsäuredianhydrid, 3,3',4,4'-Benzophenontetracarbonsäure-dianhydrid oder 3,3',4,4'-Bisphenyltetracarbonsäuredianhydrid ist.

3. Hitzebeständige Harzzusammensetzung nach Anspruch 1 oder Anspruch 2, in welcher X eine direkte Bindung ist.

4. Hitzebeständige Harzzusammensetzung nach Anspruch 1 oder Anspruch 2, in welcher X gleich -S- ist.

5. Hitzebeständige Harzzusammensetzung nach einem der vorhergehenden Ansprüche, in welcher das aromatische Polyätherimid aus wiederkehrenden Einheiten zusammengesetzt ist, die durch die Formel

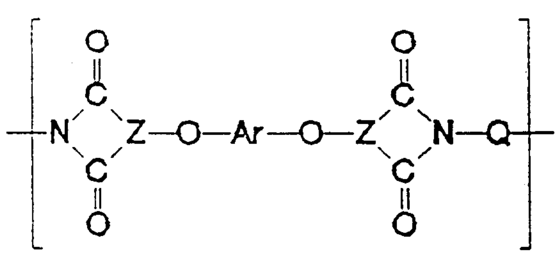

repräsentiert werden, in welcher Z eine trifunktionelle aromatische Gruppe ist, worin zwei funktionelle Gruppen von den dreien mit den benachbarten Kohlenstoffatomen verbunden sind, und sowohl Q als auch Ar Reste von zweiwertigen aromatischen Gruppen sind.

## Revendications

**1.** Une composition de résine résistante à la chaleur constituée essentiellement de 90 à 5 % en poids d'un polyétherimide aromatique ne contenant pas de motifs répétés de formule I et 10 à 95 % en poids d'un polyimide composé de motifs répétés représentés par la formule I :

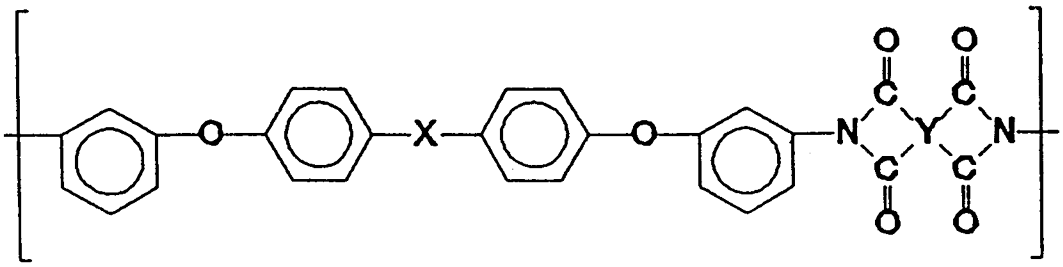

(I)

dans laquelle X est une liaison directe ou -S-, et Y est un groupe aliphatique ayant au moins deux atomes de carbone, un groupe alicyclique, un groupe aromatique monocyclique, un groupe aromatique polycyclique condensé ou un groupe aromatique polycyclique dans lequel les cycles aromatiques sont raccordés entre eux par une liaison directe ou par un groupe de pontage.

**2.** Une composition de résine résistante à la chaleur selon la revendication 1, dans laquelle Y est un reste de dianhydride pyromellitique, de dianhydride de l'acide 3,3',4,4'-benzophénonetétracarboxyliqueou de dianhydride de l'acide 3,3',4,4'-biphényltétracarboxylique.

**3.** Une composition de résine résistante à la chaleur selon la revendication 1 ou la revendication 2, dans laquelle X est une liaison directe.

**4.** Une composition de résine résistante à la chaleur selon la revendication 1 ou la revendication 2, dans laquelle X est -S-.

**5.** Une composition de résine résistante à la chaleur selon l'une quelconque des revendications précédentes, dans laquelle le polyétherimide aromatique est composé de motifs répétés représentés par la formule :

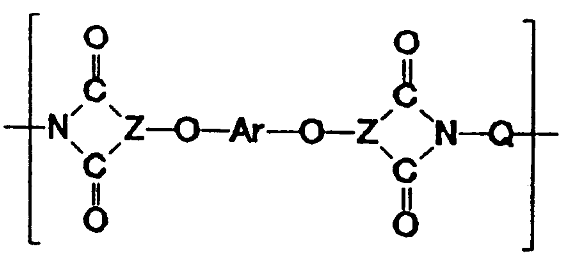

dans laquelle Z est un groupe aromatique trifonctionnel où deux des trois groupes fonctionnels sont raccordés avec des atomes de carbone adjacents et Q et Ar sont tous deux des restes de groupes aromatiques divalents.